(19) **Europäisches Patentamt**

**European Patent Office**

**Office européen des brevets**

(11) **EP 0 809 444 B1**

(12) **EUROPEAN PATENT SPECIFICATION**

(45) Date of publication and mention
of the grant of the patent:
**14.09.2005 Bulletin 2005/37**

(21) Application number: **95906069.0**

(22) Date of filing: **21.12.1994**

(51) Int Cl.⁷: **A23G 3/30**

(86) International application number:
**PCT/US1994/014765**

(87) International publication number:
**WO 1995/017829 (06.07.1995 Gazette 1995/29)**

(54) **LIQUID SORBITOL/MANNITOL/GLYCERIN BLEND AND COMPOSITIONS CONTAINING SAME**

FLÜSSIGE MISCHUNG AUS SORBITOL, MANNITOL UND GLYZERIN UND SIE ENTHALTENDE ZUSAMMENSETZUNG

MELANGE DE SORBITOL LIQUIDE/MANNITOL/GLYCERINE ET COMPOSITIONS LE CONTENANT

(84) Designated Contracting States:
**BE DE DK ES FR GB IT**

(30) Priority: **29.12.1993 US 174983**

(43) Date of publication of application:
**03.12.1997 Bulletin 1997/49**

(73) Proprietor: **WM. WRIGLEY JR. COMPANY
Illinois 60611 (US)**

(72) Inventors:
• **MAZUREK, Pamela, M.**
**Orland Park, IL 60462 (US)**
• **CHAPDELAINE, Albert, H.**
**Naperville, IL 60565 (US)**

(74) Representative: **Hayes, Adrian Chetwynd et al
Boult Wade Tennant,
Verulam Gardens
70 Gray's Inn Road
London WC1X 8BT (GB)**

(56) References cited:
**EP-A- 0 086 856          WO-A-95/30338
GB-A- 740 560            GB-A- 916 774
US-A- 4 248 895          US-A- 4 250 196
US-A- 4 250 197          US-A- 4 271 197
US-A- 4 671 961          US-A- 4 728 515
US-A- 4 806 364          US-A- 5 120 551
US-A- 5 144 024**

**Description**

BACKGROUND OF THE INVENTION

The present invention relates generally to chewing gums. More specifically, the present invention relates to chewing gums including sorbitol.

It is known to provide alditols, such as sorbitol, mannitol, and xylitol in chewing gums. Alditols can be used in chewing gum, as well as other confectioneries and food products as a "sugar substitute." These sugar substitutes have the advantage that they are not fermented in the mouth of the consumer to form products that can attack dental enamel. Therefore, sorbitol, as well as other alditols, is used in sugarless products. Additionally, sorbitol can be used as a bulking agent.

A number of patents have disclosed and discussed the use of various compositions including sorbitol. These include U.S. Patent Nos.: 4,156,740; 4,252,829; 4,466,983: 4,671,961; 4,728,515; 5,120,551; and 5,144,024.

Sorbitol can be provided in chewing gum in its crystalline form. It is believed that crystalline sorbitol currently accounts for approximately 50% of all sugar-free chewing gum formulations. Unfortunately, crystalline sorbitol is costly. Although it would be desirable to have a replacement for crystalline sorbitol, heretofore, such possible replacements were not as effective, created product stability problems, created processability issues, were even more expensive than crystalline sorbitol, and/or could not be used with certain formulations.

In this regard, aqueous sorbitol has been explored for use in chewing gum. Aqueous sorbitol is a less expensive alternative than crystalline sorbitol. Unfortunately, the use of aqueous sorbitol in chewing gum at levels above 15% can create problems with respect to product stability. Likewise, the use of aqueous sorbitol at levels above 15% can also create processability problems. This is due, it is believed, to the water content contained in the aqueous sorbitol.

Additionally, there are problems with respect to at least certain chewing gum formulations when using liquid sorbitol. Because aqueous sorbitol contains 30% water, it is detrimental to moisture sensitive ingredients when provided at high levels in chewing gum. A further difficulty with aqueous sorbitol is that it readily crystallizes and causes the gum to become brittle.

There is therefore a need for an improved method and/or sorbitol product that allows sorbitol to be added to a chewing gum formulation in a non-crystalline state.

SUMMARY OF THE INVENTION

The present invention provides an improved aqueous sorbitol composition. More specifically, the present invention provides for the use of an aqueous sorbitol/mannitol/glycerin syrup. The composition can be used to create chewing gum, as well as other products such as food stuffs, beverages, medicaments, and confectionaries. The syrup can then be used in products at levels heretofore not believed possible with a liquid sorbitol solution.

The syrup of the present invention includes, on a dry weight basis, not including any water that may be present: 40 to 70% by weight sorbitol; 24 to 56% by weight glycerin; and 4 to 9% by weight mannitol.

In a preferred embodiment, an aqueous solution of sorbitol, mannitol, and glycerin is coevaporated to create a syrup. Preferably, the syrup is evaporated so that it contains not more than 10% water.

In a preferred embodiment, the solution comprises prior to the coevaporation process: 55 to 75% aqueous sorbitol; 3 to 7% mannitol; and 25 to 45% glycerin.

In another preferred embodiment, sucrose is hydrolyzed to dextrose and fructose. The dextrose and fructose are then hydrogenated to sorbitol and mannitol. This will provide a syrup containing sorbitol and mannitol. Glycerin can then be added and the whole mixture can be coevaporated to drive off the water that is present.

In a preferred embodiment, the present invention provides a method for adding sorbitol to a product that includes other components comprising the steps of: creating a aqueous sorbitol, mannitol, and glycerin syrup; and adding the syrup to the other components to create the product. The resultant product can be any of a number of products including confectionaries, medicaments, food stuffs, beverages, and chewing gum.

In a preferred embodiment, the syrup includes not more than 10% water.

In another preferred embodiment, the present invention provides a method for producing chewing gum including sorbitol comprising the steps of: providing a liquid sorbitol, mannitol, and glycerin syrup wherein the syrup includes on a dry weight basis not including any water that may be present: from 40 to 70% by weight sorbitol; from 24 to 56% by weight glycerin; and from 4 to 9% by weight mannitol; and adding the syrup to other components to create a chewing gum formulation.

In a preferred embodiment, the chewing gum formulation also includes a crystalline form of sorbitol.

In a preferred embodiment, the syrup comprises 25 to 45% of the chewing gum formulation.

In a further embodiment, a method for creating a sugarless chewing gum is provided comprising the steps of: providing a solution of aqueous sorbitol, mannitol, and glycerin; coevaporating the solution to create a syrup; and adding the syrup to other chewing gum components to create a chewing gum formulation.

An advantage of the present invention is to provide an improved method for providing sorbitol as an ingredient in a product.

Furthermore, an advantage of the present invention is that it provides an improved sorbitol product.

Still further, an advantage of the present invention is that it provides improved products that include sorbitol as a constituent.

Another advantage of the present invention is that it provides an improved chewing gum formulation.

Moreover, an advantage of the present invention is that it provides an improved sugarless chewing gum formulation.

Furthermore, an advantage of the present invention is that it provides an improved method for creating chewing gum.

Further, an advantage of the present invention is that it provides a method for adding sorbitol to chewing gum in a state other than a crystalline state.

Moreover, an advantage of the present invention is that it provides a more cost effective method of adding sorbitol to a chewing gum composition.

Another advantage of the present invention is that it allows greater levels of sorbitol to be added to chewing gum in a non-crystalline form than heretofore practical from a commercial standpoint.

Additional features and advantages of the present invention are described in, and will be apparent from, the detailed description of the presently preferred embodiments.

DETAILED DESCRIPTION OF THE PRESENTLY PREFERRED EMBODIMENTS

The present invention provides an improved sorbitol formulation and method of adding same to products. Pursuant to the present invention, sorbitol can be added in a non-crystalline state at levels that the inventors believe were not heretofore commercially possible utilizing liquid sorbitol.

Sorbitol is a sugarless sweetener that is added to a variety of products. These products include food stuffs, beverages, medicaments, confectionaries, and chewing gum. Sorbitol can be added either alone, without other sugarless sweeteners, for example, in sugar-free chewing gum, or in combination with sugar sweeteners. Additionally, the sorbitol can be provided in, for example, the chewing gum entirely in the syrup form of the present invention or along with a crystalline form of sorbitol.

Pursuant to the present invention, the sorbitol is added to other components of a product, e.g., a chewing gum formulation, as a blend of aqueous sorbitol, mannitol, and glycerin. The blend of aqueous sorbitol, mannitol, and glycerin is provided as a syrup. To this end, a blend of aqueous sorbitol and crystallization modifiers is provided. This blend can be used to reduce the usage of crystalline sorbitol in standard product formulations. It has been found that the resultant product, including the sorbitol composition of the present invention, exhibits increased binding capacity over currently used binders in sugar-free gum.

The syrup includes on a dry weight basis not including any water that may be present: 40 to 70% sorbitol; 24 to 56% glycerin; and 4 to 9% mannitol. In a preferred embodiment, the syrup includes on a dry weight basis not including water that may be present: 47 to 65% sorbitol; 28 to 45% glycerin; and 5 to 7% mannitol. Prior to any evaporation of the syrup, the syrup will contain approximately 20% water. If desired, the syrup can be used in this form. However, it is envisioned that at least some of the water will be driven off through evaporation or other means.

In an embodiment, to provide the aqueous sorbitol of the present invention, aqueous sorbitol, mannitol, and glycerin are added together and then coevaporated to create a syrup. Preferably, the aqueous sorbitol, mannitol, and glycerin combination is evaporated so that it contains not more than 10% water. Most preferably, the aqueous sorbitol, glycerin, and mannitol is evaporated so that it contains no more than 7% water.

In another embodiment, the syrup blend is made by hydrolyzing sucrose to dextrose and fructose. The dextrose and fructose are then hydrogenated to sorbitol and mannitol. The result will be a syrup containing sorbitol and mannitol. Glycerin can be added and the whole mixture can be coevaporated to drive off the water.

The aqueous sorbitol, glycerin, and mannitol can be provided in different combinations and ratios. In this regard, preferably prior to evaporation: the aqueous sorbitol comprises 55 to 75% by weight of the combination; mannitol comprises 3 to 7% by weight of the combination; and glycerin comprises 25 to 45% by weight of the combination. In a most preferred embodiment, prior to evaporation: the aqueous sorbitol comprises 60 to 70% by weight of the combination; mannitol comprises 5 to 6% by weight of the combination; and glycerin comprises 25 to 35% by weight of the combination. In an embodiment that has been found to function satisfactorily, prior to evaporation the aqueous sorbitol comprises approximately 65% of the combination, glycerin approximately 30%, and mannitol approximately 5%. The syrup will include on a dry weight basis not including the water present 56.5% sorbitol, 37.3% glycerin, and 6.2% mannitol.

The aqueous sorbitol syrup can be used in any product that uses sorbitol. Such products include confectionaries, medicaments, beverages, and food products.

In an embodiment, the present invention is used with sugarless chewing gums, because they typically contain sorbitol. However, it should be noted that the present invention can be used with any chewing gum that includes sorbitol.

Chewing gum generally consists of a water insoluble gum base, a water soluble portion, and flavors. The water soluble portion dissipates with a portion of the flavor over a period of time during chewing. The gum base portion is retained in the mouth throughout the chew.

The insoluble gum base generally comprises elastomers, resins, fats and oils, softeners, and inorganic fillers. The gum base may or may not include wax. The insoluble gum base can constitute 5 to 95 percent, by weight, of the chewing gum, more commonly, the gum base comprises 10 to 50 percent of the gum, and in some preferred embodiments, 20 to 35 percent, by weight, of the chewing gum.

In an embodiment, the chewing gum base of the present invention contains 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of 10,000 to 95,000, isobutylene-isoprene copolymer (butyl elastomer), styrene-butadiene copolymers having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is abhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. the preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Serial No. 07/906,921.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes.

Softeners are added to the chewing gum in order to optimize the chewability and mouth feel of the gum. The softeners, which are also known as plasticizers and plasticizing agents, generally constitute between 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum. Additionally, the sorbitol/mannitol/glycerin syrup of the present invention can be used as a softener and binding agent.

Bulk sweeteners include both sugar and sugarless components. Bulk sweeteners typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, galactose and corn syrup solids, alone or in combination.

Sorbitol can be used as a sugarless sweetener. Preferably, the sorbitol syrup of the present invention comprises 25% to 45% by weight of the chewing gum composition. As noted above, in addition to the sorbitol syrup of the present invention, crystalline sorbitol, if desired, can also be used. Additionally, sugarless sweeteners can include, but are not limited to, other sugar alcohols such as mannitol, xylitol, hydrogenated starch hydrolysates and maltitol, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin and monellin, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose; Raftilose, Raftilin; Fructooligosaccharides (NutraFlora);Palatinose oligosaccharide; Guar Gum Hydrolysate (Sun Fiber); or indigestible dextrin (Fibersol). However, other low calorie bulking agents can be used.

A variety of flavoring agents can be used. The flavor can be used in amounts of 0.1 to 15 weight percent of the gum, and preferably, 0.2 to 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen and anise. Artificial flavoring agents and components may also be used. Natural and artificial flavoring agents may be combined in any sensorially acceptable fashion.

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time.

The sorbitol syrup of the present invention can be added next along with any other syrup softeners or bulking agents and part of the bulk portion. Further, parts of the bulk portion may then be added to the mixer. Flavoring agents are typically added with the final part of the bulk portion. The entire mixing process typically takes from 5 to 15 minutes, although longer mixing times are sometimes required. Those skilled in the art will recognize that variations of this general mixing procedure, or other mixing procedures, can be followed.

By way of example, and not limitation, an example of the present invention will now be set forth.

EXAMPLES 1-6

A sorbitol mixture was created by placing a ratio of 65% aqueous sorbitol, 30% glycerin, and 5% mannitol in a suitable container. The mixture was evaporated to an RI -7°C ((20°F)) of 1.498 (approximately only 7% water). The syrup was then placed in formulas Ex. 2 - Ex. 6 set forth in Table 1 below (Ex. 1 is a reference formula).

TABLE 1

|  | Ex. 1 | Ex. 2 | Ex. 3 | Ex. 4 | Ex. 5 | Ex. 6 |
|---|---|---|---|---|---|---|
| Crystalline Sorbitol | 49.17 | 27.56 | 32.56 | 35.56 | 36.65 | 41.79 |
| Gum Base | 23.2 | 23.2 | 23.2 | 23.2 | 23.2 | 23.2 |
| Sorbitol Mannitol/Glycerin Syrup | ---- | 45.0 | 40.0 | 35.0 | 30.0 | 25.0 |
| Coevaporated Lycasin/Glycerin | 9.31 | ---- | ---- | ---- | ---- | ---- |
| Glycerin | 9.31 | ---- | ---- | ---- | 2.64 | 2.7 |
| Mannitol | 4.77 | ---- | ---- | 2.0 | 3.27 | 3.07 |

TABLE 1   (continued)

|  | Ex. 1 | Ex. 2 | Ex. 3 | Ex. 4 | Ex. 5 | Ex. 6 |
|---|---|---|---|---|---|---|
| Peppermint Flavor | 1.65 | 1.65 | 1.65 | 1.65 | 1.65 | 1.65 |
| Encapsulated Aspartame | 0.34 | 0.34 | 0.34 | 0.34 | 0.34 | 0.34 |
| Spray Dried Peppermint Flavor | 0.25 | 0.25 | 0.25 | 0.25 | 0.25 | 0.25 |
| Talc | 2.0 | 2.0 | 2.0 | 2.0 | 2.0 | 2.0 |

A reduction of 55% crystalline sorbitol was achieved by using the present invention. In this regard, 45% of the necessary sorbitol is provided by the syrup of the present invention and a satisfactory chewing gum is still achieved. Additionally, it was noted in chewing the gum formulas that used the sorbitol syrup of the present invention (Exs. 2-6) that an increase in binding capacity was achieved as compared to a current chewing gum binder lycasin/glycerin (Ex. 1).

As previously noted, the sorbitol syrup can be used to create other products aside from chewing gum. By way of example, and not limitation, such other products may have the following formulas.

EXAMPLES 7-12

A sorbitol, mannitol, and glycerin syrup containing only 2% water (hereinafter "98% sorbitol syrup") may be used in a sugarless, non-cariogenic hard candy as shown in the following formulas:

Example 7

| Fruit flavored hard candy: |  |
|---|---|
|  | % |
| Xylitol | 15.8 |
| Sorbitol | 34.8 |
| 98% Sorbitol Syrup | 38.0 |
| Water | 11.0 |
| Citric Acid | 0.3 |
| Artificial Sweetener/ Fruit Flavor/Color | as needed |

Example 8

| Butterscotch Hard Candy: |  |
|---|---|
|  | % |
| 98% Sorbitol Syrup | 53.6 |
| Sorbitol | 26.4 |
| Water | 17.66 |
| Butter | 2.06 |
| Salt | 0.12 |
| Natural and Artificial Flavor | 0.16 |

Example 9

| Hard Candy: | |
|---|---|
| | % |
| Sorbitol | 30.0 |
| 98% Sorbitol Syrup | 60.0 |
| Xylitol | 9.35 |
| Aspartame | 0.35 |
| Salt | 0.12 |
| Citric Acid/Flavor/Color | as needed |

Procedure: Hard candies can be made by the following procedure:

1. In a stainless steel, steam jacketed kettle, the 98% sorbitol syrup, xylitol, water, sorbitol, and salt are added and the mixture is heated to form a thick syrup.
2. The syrup is cooked and mixed until a temperature of about 149°C (300°F) and a moisture level of about 1-2% is obtained.
3. The heavy syrup is poured onto a stainless steel cooling table.
4. Citric acid, artificial ingredients, flavors and color, and butter are added and mixed by kneading.
5. The resultant product is allowed to cool to room temperature and cut as needed.

Example 10 (sugarless taffy)

98% sorbitol syrup may be used to prepare a sugar-free taffy by the following formula and procedure:
Formula:

| | % As Is | % DSB | 20# (9.072Kg) Batch |
|---|---|---|---|
| 98% Sorbitol Syrup | 94.5 | 92.7 | 18.9 (8.573 Kg) |
| 110°F, M.P. Vegetable Oil | 5.25 | 7.0 | 1.0 (0.476 Kg) |
| Lecithin | 0.25 | 0.3 | 0.3 (0.136 Kg) |
| Flavor/Color/Acid/ Sweetener | As needed | | |

Procedure:

1. Weigh 98% sorbitol syrup into an atmospheric cooker, such as a Savage open fire cooker, and cook to about 123.9°C (255°F). No agitation is required for this step.
2. Allow the cooked 98% sorbitol syrup to cool to about 110°C (230°F) and add fat and lecithin; fat does not have to be premelted. Mix until uniform.
3. Pour mass on oiled cooling table. Side bars may be necessary for initial cooling if table is small.
4. Work in color, flavor and acid on the slab before pulling (color and flavor may also be added on puller). Cool to plastic texture.
5. Pull cooked mass until desired texture is attained. Cut and wrap in moisture resistant packaging.

Example 11 (sugar-free caramel)

98% sorbitol syrup may be used to prepare a sugar-free caramel by the following formula and procedure:

| 98% Sorbitol Syrup | 58.53% |
|---|---|
| Evaporated milk | 33.24 |
| Coconut Oil, 33°C (92°F) | 7.68 |
| Lecithin | 0.20 |
| Salt | 0.20 |
| Aspartame | 0.11 |

(continued)

| | |
|---|---|
| Vanillin | 0.04 |
| Total | 100.00% |

Procedure:

1. Prepare aspartame slurry by mixing 1/3 ratio of aspartame to coconut oil in a high shear blender for about 30 seconds.
2. Premix all ingredients, except aspartame slurry, half of the evaporated milk and the vanillin, for 5 minutes at about 48.9°C (120°F).
3. Bring premix to a boil and slowly add the balance of the evaporated milk, maintaining the boil.
4. Cook to the desired texture. Final cook temperature will vary according to the cooking process. A suggested final cook temperature is about 118.3°C (245°F).
5. Cool the caramel to about 104°C (220°F) and add the aspartame slurry slowly with mixing. The vanillin should also be added at this time.
6. Slab, cut and wrap as desired.

Example 12 (sugarless gum drops)

| | % |
|---|---|
| Gelatin 200 bloom type B | 7.0 |
| Crystalline sorbitol | 34.9 |
| 98% Sorbitol Syrup | 32.6 |
| Hot Water (80-90°C) | 14.0 |
| Water | 10.0 |
| Citric Acid Solution | 1.5 |
| Fruit Flavor/Color | as needed |

Procedure:

1. Dissolve gelatin directly in hot water.
2. Cook the 98% sorbitol syrup, sorbitol and water at 115°C, and add gelatin solution.
3. Stir slowly in order to obtain a smooth homogenous mixture.
4. Remove air bubbles with deaeration equipment or other available means.
5. Add citric acid solution, flavor and color.
6. Deposit in cool and dry starch, and sprinkle a little starch onto the articles.
   Temperature: 70°C. Total solids when depositing: 78°C Brix.
7. Store the starch tray at room temperature for 24 hours.
8. After removal from the molding starch, oil the articles or same with mannitol.

Other food items in which 98% sorbitol syrup may be used as a non-cariogenic bulking agent are:

1. Confections and frostings.
2. Dressings for salads.
3. Frozen dairy deserts and mixes.
4. Gelatins, puddings and fillings.
5. Hard candy.
6. Soft candy.
7. Baked goods and baking mixes.

**Claims**

1.  A method for producing a product that includes sorbitol comprising the steps of:

    providing a syrup of aqueous sorbitol, mannitol, and glycerin wherein the syrup includes on a dry weight basis not including any water that may be present:

    from 40 to 70% by weight sorbitol;
    from 24 to 56% by weight glycerin; and
    from 4 to 9% by weight mannitol; and

    adding the syrup to other components to create a product formulation.

2.  A method as claimed in Claim 1 wherein the syrup is created by coevaporating a solution that comprises aqueous sorbitol, mannitol, and glycerin into a syrup.

3.  A method as claimed in Claim 1 or Claim 2 wherein the syrup is created by coevaporating a solution that comprises prior to coevaporation:

    from 55 to 75% by weight aqueous sorbitol;
    from 3 to 7% by weight mannitol; and
    from 25 to 45% weight glycerin.

4.  A method as claimed in any one of Claims 1 to 3 wherein the syrup includes not more than 10% water.

5.  A method as claimed in any one of Claims 1 to 4 wherein the product formulation includes a crystalline form of sorbitol.

6.  A method as claimed in any one of Claims 1 to 5 wherein the product formulation is sugar-free.

7.  A method as claimed in any one of Claims 1 to 6 wherein the syrup comprises from 25 to 45% by weight of the chewing gum formulation.

8.  A method as claimed in Claims 1 to 7 wherein the steps of making the sorbitol syrup comprise:

    hydrolyzing sucrose to dextrose and fructose;
    hydrogenating the dextrose and fructose to create a syrup; and
    adding to the syrup glycerin.

9.  A method as claimed in any one of Claims 1 to 7 wherein the steps of making sorbitol syrup comprise the steps of:

    providing an aqueous solution of sorbitol; and
    adding to the aqueous solution of sorbitol, mannitol and glycerin to create a syrup.

10. A method as claimed in any one of Claims 1 to 9 wherein the product is a chewing gum.

11. A method as claimed in any one of Claims 1 to 10 wherein the product is a confection.

12. A method as claimed in any one of Claims 1 to 9 wherein the product is a medicament.

13. A method as claimed in any one of Claims 1 to 9 wherein the product is a food stuff.

14. A method as claimed in any one of Claims 1 to 9 wherein the product is a beverage.

15. A sorbitol containing product comprising a syrup which includes on a dry weight basis, not including any water that may be present:

    from 40 to 70% by weight sorbitol;

from 24 to 56% by weight glycerin; and
from 4 to 9% by weight mannitol.

16. A product as claimed in Claim 15 wherein the syrup is created by the coevaporation of a solution that comprises prior to coevaporation:

from 55 to 75% by weight aqueous sorbitol;
from 3 to 7% by weight mannitol; and
from 25 to 45% by weight glycerin.

17. A product as claimed in Claim 15 or Claim 16 wherein the syrup includes not more than 10% water.

18. A product as claimed in any one of Claims 15 to 17 wherein the syrup comprises not more than 3% water.

19. A product as claimed in any one of Claims 15 to 18 wherein the syrup includes on a dry weight basis not including any water that may be present:

from 47 to 65% by weight sorbitol;
from 28 to 45% by weight glycerin; and
from 5 to 7% by weight mannitol.

**Patentansprüche**

1. Verfahren zum Herstellen eines Produkts, welches Sorbitol enthält, umfassend die Schritte:

Bereitstellen eines Sirups aus wässrigem Sorbitol, Mannitol und Glycerin, wobei der Sirup bezogen auf die Trockensubstanzmasse, die jegliches möglicherweise vorhandene Wasser nicht einschließt, enthält:

40 bis 70 Gew.-% Sorbitol;

24 bis 56 Gew.-% Glycerin; und

4 bis 9 Gew.-% Mannitol; und

Zugeben des Sirups zu anderen Komponenten, um eine Produktformulierung zu erzeugen.

2. Verfahren wie in Anspruch 1 beansprucht, wobei der Sirup durch Koevaporieren einer Lösung, die wässriges Sorbitol, Mannitol und Glycerin umfasst, zu einem Sirup erzeugt wird.

3. Verfahren wie in Anspruch 1 oder Anspruch 2 beansprucht, wobei der Sirup durch Koevaporieren einer Lösung erzeugt wird, welche vor der Koevaporation umfasst:

55 bis 75 Gew.-% wässriges Sorbitol;

3 bis 7 Gew.-% Mannitol; und

25 bis 45 Gew.-% Glycerin.

4. Verfahren wie in einem der Ansprüche 1 bis 3 beansprucht, wobei der Sirup nicht mehr als 10 % Wasser enthält.

5. Verfahren wie in einem der Ansprüche 1 bis 4 beansprucht, wobei die Produktformulierung eine kristalline Form von Sorbitol enthält.

6. Verfahren wie in einem der Ansprüche 1 bis 5 beansprucht, wobei die Produktformulierung zuckerfrei ist.

7. Verfahren wie in einem der Ansprüche 1 bis 6 beansprucht, wobei der Sirup 25 bis 45 Gew.-% der Kaugummiformulierung umfasst.

8. Verfahren wie in den Ansprüchen 1 bis 7 beansprucht wobei die Schritte zum Herstellen des Sorbitolsirups umfassen:

Hydrolysieren von Sucrose zu Dextrose und Fructose;

Hydrieren der Dextrose und Fructose um einen Sucrose zu erzeugen; und

Zugeben von Glycerin zu dem Sirup.

9. Verfahren wie in einem der Ansprüche 1 bis 7 beansprucht, wobei die Schritte zum Herstellen von Sorbitolsirup die Schritt umfassen:

Bereitstellen einer wässrigen Lösung von Sorbitol; und

Zugeben von Mannitol und Glycerin zu der wässrigen Lösung von Sorbitol, um einen Sirup zu erzeugen.

10. Verfahren wie in einem der Ansprüche 1 bis 9 beansprucht, wobei das Produkt ein Kaugummi ist.

11. Verfahren wie in einem der Ansprüche 1 bis 10 beansprucht, wobei das Produkt ein Konfekt ist.

12. Verfahren wie in einem der Ansprüche 1 bis 9 beansprucht, wobei das Produkt ein Medikament ist.

13. Verfahren wie in einem der Ansprüche 1 bis 9 beansprucht, wobei das Produkt ein Lebensmittel ist.

14. Verfahren wie in einem der Ansprüche 1 bis 9 beansprucht, wobei das Produkt ein Getränk ist.

15. Sorbitol enthaltendes Produkt, umfassend einen Sirup, welcher bezogen auf die Trockensubstanzmasse, die jegliches möglicherweise vorhandene Wasser nicht einschließt, enthält:

40 bis 70 Gew.-% Sorbitol;

24 bis 56 Gew.% Glycerin; und

4 bis 9 Gew.-% Mannitol.

16. Produkt wie in Anspruch 15 beansprucht, wobei der Sirup durch die Koevaporation einer Lösung erzeugt wird, welche vor der Koevaporation umfasst:

55 bis 75 Gew.% wässriges Sorbitol;

3 bis 7 Gew.-% Mannitol; und

25 bis 45 Gew.-% Glycerin.

17. Produkt wie in Anspruch 15 oder Anspruch 16 beansprucht, wobei der Sirup nicht mehr als 10 % Wasser enthält.

18. Produkt wie in einem der Ansprüche 15 bis 17 beansprucht, wobei der Sirup nicht mehr als 3 % Wasser umfasst.

19. Produkt wie in einem der Ansprüche 15 bis 18 beansprucht, wobei der Sirup bezogen auf die Trockensubstanzmasse, die jegliches möglicherweise vorhandene Wasser nicht einschließt, enthält:

47 bis 65 Gew.-% Sorbitol;

28 bis 45 Gew.-% Glycerin; und

5 bis 7 Gew.-% Mannitol.

**Revendications**

1. Procédé pour la préparation d'un produit qui comprend du sorbitol, comprenant les étapes consistant :

   à fournir un sirop de sorbitol aqueux, de mannitol et de glycérol, ledit sirop comprenant, sur base pondérale sèche sans inclure une quelconque quantité d'eau qui peut être présente :

   40 à 70 % en poids de sorbitol ;
   24 à 56 % en poids de glycérol ; et
   4 à 9 % en poids de mannitol ; et

   à ajouter le sirop à d'autres constituants pour créer une formulation du produit.

2. Procédé suivant la revendication 1, dans lequel le sirop est créé en co-évaporant une solution qui comprend du sorbitol aqueux, du mannitol et du glycérol en un sirop.

3. Procédé suivant la revendication 1 ou la revendication 2, dans lequel le sirop est créé en co-évaporant une solution qui comprend, avant co-évaporation :

   55 à 75 % en poids de sorbitol aqueux ;
   3 à 7 % en poids de mannitol ; et
   25 à 45 % en poids de glycérol.

4. Procédé suivant l'une quelconque des revendications 1 à 3, dans lequel le sirop comprend une quantité d'eau non supérieure à 10 %.

5. Procédé suivant l'une quelconque des revendications 1 à 4, dans lequel la formulation du produit comprend une forme cristalline de sorbitol.

6. Procédé suivant l'une quelconque des revendications 1 à 5, dans lequel la formulation du produit est dépourvue de sucre.

7. Procédé suivant l'une quelconque des revendications 1 à 6, dans lequel le sirop représente 25 à 45 % en poids de la formulation de gomme à mâcher.

8. Procédé suivant les revendications 1 à 7, dans lequel les étapes de préparation du sirop de sorbitol comprennent :

   l'hydrolyse du saccharose en dextrose et fructose ;
   l'hydrogénation du dextrose et du fructose pour créer un sirop ; et
   l'addition de glycérol au sirop.

9. Procédé suivant l'une quelconque des revendications 1 à 7, dans lequel les étapes de préparation du sirop de sorbitol comprennent les étapes consistant :

   à fournir une solution aqueuse de sorbitol ; et
   à ajouter à la solution aqueuse de sorbitol du mannitol et du glycérol pour créer un sirop.

10. Procédé suivant l'une quelconque des revendications 1 à 9, dans lequel le produit est une gomme à mâcher.

11. Procédé suivant l'une quelconque des revendications 1 à 10, dans lequel le produit est un produit de confiserie.

12. Procédé suivant l'une quelconque des revendications 1 à 9, dans lequel le produit est un médicament.

13. Procédé suivant l'une quelconque des revendications 1 à 9, dans lequel le produit est une denrée alimentaire.

14. Procédé suivant l'une quelconque des revendications 1 à 9, dans lequel le produit est une boisson.

15. Produit contenant du sorbitol, comprenant un sirop qui comprend, sur base pondérale sèche sans inclure une quelconque quantité d'eau qui peut être présente :

40 à 70 % en poids de sorbitol ;
24 à 56 % en poids de glycérol ; et
4 à 9 % en poids de mannitol.

16. Produit suivant la revendication 15, dans lequel le sirop est créé par co-évaporation d'une solution qui comprend, avant co-évaporation :

55 à 75 % en poids de sorbitol aqueux ;
3 à 7 % en poids de mannitol ; et
25 à 45 % en poids de glycérol.

17. Produit suivant la revendication 15 ou la revendication 16, dans lequel le sirop comprend une quantité d'eau non supérieure à 10 %.

18. Produit suivant l'une quelconque des revendications 15 à 17, dans lequel le sirop comprend une quantité d'eau non supérieure à 3 %.

19. Produit suivant l'une quelconque des revendications 15 à 18, dans lequel le sirop comprend, sur base pondérale sèche sans inclure une quelconque quantité d'eau qui peut être présente :

47 à 65 % en poids de sorbitol ;
28 à 45 % de glycérol ; et
5 à 7 % en poids de mannitol.